# EUROPEAN PATENT SPECIFICATION

(11) **EP 3 002 979 B1**
(45) Date of publication and mention of the grant of the patent: **21.08.2019**
(21) Application number: 14187616.9
(22) Date of filing: 03.10.2014
(51) Int. Cl.: H04W 56/00, H04B 7/26, H04W 36/00

(54) **TDMA slot structure**
TDMA-Schlitzstruktur
Structure de fente TDMA

(43) Date of publication of application: 06.04.2016
(73) Proprietor: Airbus Defence and Space Oy, 00380 Helsinki (FI)
(72) Inventor: Kervinen, Ilkka, 00380 Helsinki (FI)
(74) Representative: Kolster Oy Ab

(56) References cited:
- WO-A1-95/02307
- US-A- 6 049 538
- US-A1- 2005 157 694
- US-A1- 2009 034 491

## Description

### FIELD

The present invention relates to a time division multiple access technique with a fixed slot structure on an air interface, and especially to uplink bursts.

### BACKGROUND ART

In wireless communications systems, a multiple access technique is used to divide the air interface into several channels, a channel providing a link between a mobile apparatus and the wireless communications system. One multiple access technique is TDMA (time division multiple access) which provides different time slots for channels to be used by different mobile apparatuses. WO 1995/02307 and US 6049538 disclose different solutions for an adaptive TDMA structure in which a mobile apparatus shifts its transmission time by a timing advance determined to the mobile apparatus based on its propagation delay to a base station serving the mobile apparatus. When an air interface is based on a fixed TDMA structure, i.e. on a structure that is not adjustable to take into account varying distances between a base station and mobile apparatuses served by the base station, the basic principle is that part of the uplink time slot is reserved for a guard period, the purpose of which is to ensure that an uplink transmission burst in an allocated time slot (slot 1) from one mobile apparatus does not collide in the network side with an uplink transmission burst in the next time slot (slot 2) from another mobile apparatus. The collision may happen since the mobile apparatuses may have different distances to the base station, and hence they have different propagation delays which are not taken into account in the fixed structure. In other words, in the fixed TDMA structure the fixed guard period is the same for all mobile apparatuses, regardless of their varying propagation delays. For example, in TETRA (TErrestrial, Trunked RAdio) the air interface is based on a fixed TDMA structure in which the start of the TDMA frame received at a network side is delayed by the fixed guard period period of 2 timeslots from the start of a TDMA frame on the downlink to enable a mobile apparatus to respond to the downlink signalling within the allocated time slot in the associated uplink frame. To fulfil the purpose of the guard period, the guard period, or a corresponding guard time, defines the maximum radius of a cell in a system using the fixed TDMA structure: the maximum transmission radius is defined such that each mobile apparatus transmission burst (i.e. uplink transmission) arrives in its allocated time slot at the network side. If a cell size exceeds the maximum, a propagation delay may become too large to a remote mobile apparatus locating at the edge of the cell, and the transmission bursts collide at a network side, and data is lost.

### SUMMARY

The invention relates to a method, an apparatus, a computer program product and a system defined in the independent claims. Different embodiments are disclosed in the dependent claims.

An aspect of the invention provides a solution in which at least in one cell transmission times defined in the fixed slot structure are time shifted according to a minimum path delay value.

### BRIEF DESCRIPTION OF THE DRAWINGS

In the following, exemplary embodiments will be described in greater detail with reference to accompanying drawings, in which
Figure 1 shows simplified architecture of a system and a block diagram of an exemplary apparatus;
Figures 2 and 4 are flow charts illustrating different exemplary functionalities;
Figure 3 illustrates non-shifted and shifted uplinks; and
Figure 5 is a block diagram of an exemplary apparatus.

### DETAILED DESCRIPTION OF SOME EMBODIMENTS

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

The present invention is applicable to an access point, a base station and/or corresponding component/network element, and any wireless system using TDMA with a fixed slot structure. In the fixed slot structure a starting time of a transmission of a mobile apparatus is fixed in relation to a time slot allocated for the transmission, i.e. the time when the mobile apparatus starts to transmit is not adjustable by the mobile apparatus, and therefore the timing of the slot structure is fixed. There exist also adaptive slot structures in which the user equipment may adjust the starting time. For example, GSM (Global system for mobile communications) uses an adaptive TDMA slot structure. Compared to the adaptive slot structure, TDMA systems using the fixed slot structure avoid real-time measurements of propagation delays of mobile apparatuses and the extra signalling needed for adjusting the slot structure to each mobile apparatus individually and in real time according to the varying, or at least time to time varying, distance between the mobile apparatus in question and the base station. Examples of systems using TDMA fixed slot structure include TETRA-based systems, P25 phase 2 -based systems, and DMR (digital mobile radio) -based systems.

In the following, different embodiments will be described using, as an example of a system architecture whereto the embodiments may be applied, an architecture based on TETRA, without restricting the embodiments to such a solution. Similar architecture and solutions may be implemented with P25 phase 2 and DMR, for example. The protocols used, the specifications of communication systems, networks, apparatuses belonging to network infrastructure, like access point nodes, and wireless apparatuses, develop rapidly. Such development may require extra changes to an embodiment. Therefore, all words and expressions should be interpreted broadly and they are intended to illustrate, not to restrict, the embodiment.

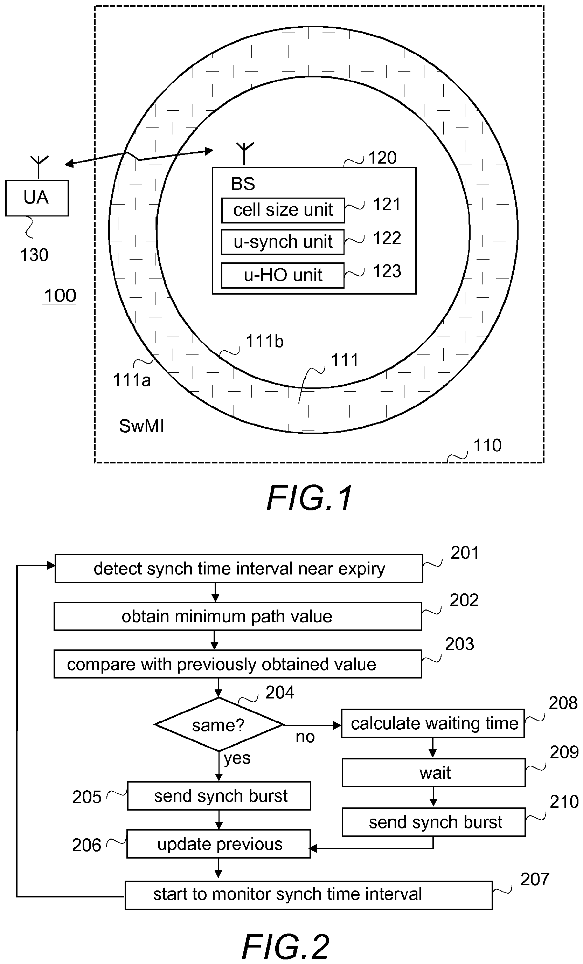

A general architecture of a TETRA system is illustrated in Figure 1. Figure 1 is a simplified system architecture only showing some apparatuses and functional entities, all being logical units whose implementation may differ from what is shown. The connections shown in Figure 1 are logical connections; the actual physical connections may be different. It is apparent to a person skilled in the art that the systems also comprise other apparatuses, functions and structures used in or for communication in TETRA. They, as well as the protocols used, are well known by persons skilled in the art and are irrelevant to the actual invention. Therefore, they need not to be discussed in more detail here.

In the example illustrated in Figure 1, the TETRA radio system 100 comprises a TETRA user apparatus 130 connectable over an air link to a switching and management infrastructure (SwMI) 110 via a base station 120 providing one or more cells. In other words, the base station 120 provides the TETRA user apparatus access for uplink (from mobile user apparatuses to the base station) and downlink (from the base station to user apparatus(es)) over the air communication, and hence the base station 120 depicts an access node.

The switching and management infrastructure (SwMI) 110 is equipment for a voice plus data (V+D) network enabling the TETRA user apparatuses to communicate with each other, for example, or on a combination of another kind of network, like WLAN, and SwMI, for example. However, the details and the actual implementation of the TETRA switching and management infrastructure (SwMI) 110 are well known by persons skilled in the art and are irrelevant to the actual invention and to implementations. Therefore, they need not to be discussed in more detail here.

The TETRA user apparatus 130 represents herein any mobile apparatus. A mobile apparatus, such as the TETRA user apparatus, is an apparatus/equipment/terminal that is a computing device providing secure voice and/or data communications for users over the air. The TETRA user apparatus 130 may be a mobile radio apparatus, such as a handheld radio apparatus, or a so called fixed radio apparatus in a vehicle, for example. Examples of handheld radio apparatuses include a handheld radio terminal, a smart-phone, a personal digital assistant (PDA), a handset, a laptop, a touch screen computer, a tablet, a notebook and a multimedia device. However, below term "user apparatus" is used, and it covers all kinds of mobile apparatuses, like a mobile station or a mobile unit and the above examples.

In the illustrated example, the base station 120 is an extended coverage base station that is responsible for radio transmission and reception to or from the mobile stations and is configured to control its air interface and configured to provide at least an extended range cell 111 with a hole, the hole being defined by an inner border radius 111b, the extended range cell coverage being defined by the inner border radius 111b and the outer border radius 111a. Although the cell with a hole is called herein an extended range cell indicating that the outer border radius 111a may be bigger than a maximum radius of a conventional TETRA cell that the term "extended range cell" covers also a cell having a hole and outer border radius that is smaller than or equal to the radius of a conventional TETRA cell. Herein, the term "hole" means an area of any shape near the base station, where a propagation delay from a user apparatus is shorter than a minimum path delay described below in more detail.

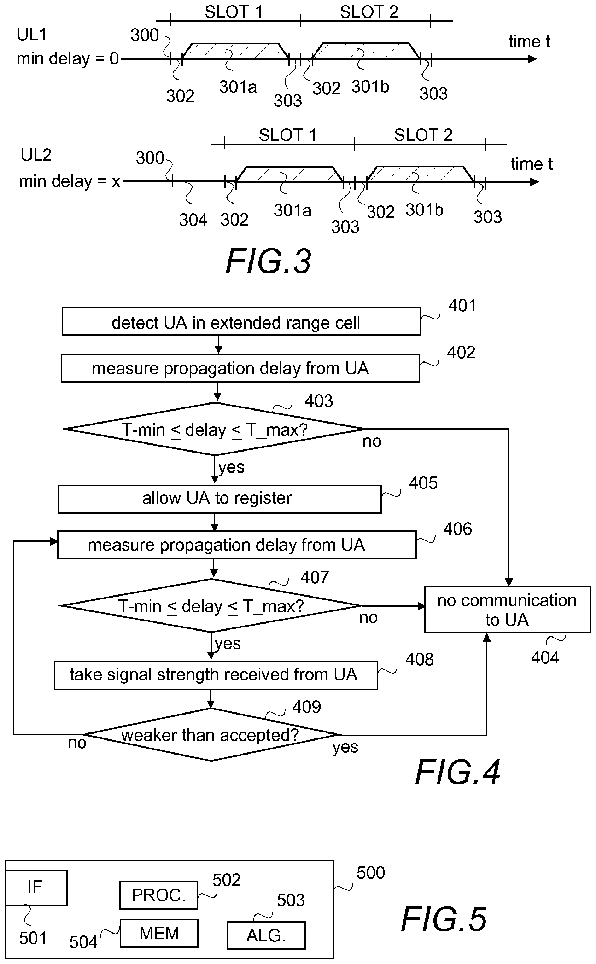

For the extended range cell the base station 120 comprises a cell size unit 121, by means of which it may adjust the cell size of the extended range cell rather freely, the only restriction being that the distance between an inner border radius 111b of the cell and the outer border radius 111a of the same cell may not exceed the maximum distance defined by the guard period between bursts, the distance between the inner border radius and the outer border radius may be at the most the maximum radius of a conventional TETRA cell. The base station 120 further comprises in the illustrated example, for the air interface control in the extended coverage cell, an updated synchronization unit (u-synch unit) 122 and an updated handover unit (u-HO unit) 123, the updated units taking into account the cell size, as will be described in more detail below with Figures 2 and 4. The updated handover unit (u-HO) may be replaced by an updated communication unit, or by any other unit, that is configured to perform similar functionalities. Although the units are represented as separate units, they, or two of them, may be integrated into one unit. Further, it should be appreciated that for base stations that are not configured to control their air interface one or more of the above disclosed units may be in a network element configured to act as a base station controller.

The cell size unit 121 comprises, and/or has access to, information by means of which two parameter values for the extended range cell may be determined, by the cell size unit, the parameters being a maximum path delay by means of which the outer border radius is defined, and a minimum path delay by means of which the inner border radius is defined. Both or one of the parameter values, or information with which at least one of the parameter values may be calculated or otherwise determined, may be set cell -specifically or network widely or sub-network widely. If a value for the minimum path delay is given, a value for the maximum path delay may be calculated from the value for the minimum path delay and the guard period, and vice versa. Hence it is ensured that the fixed TDMA structure without uplink data collisions is maintained. Instead of the guard period, a smaller period may be set. Further, instead of setting the maximum path delay, information indicating the target outer border radius may be given, and/or instead of setting the minimum path delay, information indicating the target inner border radius may be given. In the illustrated example it is assumed, for the sake of clarity, that the cell size unit 121 comprises the parameter values for the cell, and the network management system via which one or both of the parameter values and/or information based on which one or both of the parameter values may be calculated, are set, is configured to ensure that the values and/or the information fulfil the above criteria. However, it should be appreciated that the cell size unit 121 may be configured to obtain the parameter values and/or the information and to check that they fulfil the criteria that the distance between the inner border radius and the outer border radius is at the most the distance determined by the uplink guard period between two consecutive uplink bursts. Further, it should be appreciated that one or more of the above values may be preprogrammed in a base station when it is installed or manufactured, one or more of the above values may be set and/or changed by a local base station configuration terminal and/or one or more of the above values may be downloaded from a remote network management system. Nevertheless, at the simplest the cell size unit 121 is a memory area storing at least one of the values, like the minimum path delay or the target inner border radius.

Depending on an implementation and assuming that the cell form is near circular, the base station may or may not provide a conventional cell covering the hole of the extended range cell in addition to one or more extended range cells by having antennas at two or more different antenna heights, the one or more antennas that are placed higher providing the one or more extended range cells; the higher the antennas are, the bigger the outer border radius may be. Further, if the base station provides two or more extended range cells with holes having different sizes, the conventional cell may cover the smallest hole. However, it should be appreciated that it bears no significance how the coverage of the hole, i.e. the coverage within the area of the inner border radius is arranged, and other arrangements, like hot spots, or a combination of a macro cell and hot spot cells, to provide coverage for the hole may be used as well. Also herein, as in prior art solutions, an uplink and/or downlink transmission power may limit the cell size, for example when a maximum transmission power of a user apparatus is too low to cover a link budget of a cell and the transmission power of the user apparatus cannot be, or is not, adjusted to match the link budget, and/or a transmission power of a base station is too low to cover a link budget of a user apparatus. Further, it is obvious to one skilled in the art how to implement the above described principles with "segment" cells created by directional antennas (beam antennas).

For example, thanks to the extended range cells, TETRA coverage over the whole Baltic Sea may be provided by equipping base stations locating along the coast with additional directional antennas placed high enough and having as a minimum path delay a little less than 0.94 milliseconds which is the uplink guard period according to current TETRA time slot structure, the additional antennas providing extended range cells, having an inner border about 80-83 km away from the corresponding base station, and an outer border from about 160 km away from the corresponding base station. It should be appreciated that it is possible to add further antennas providing an extended range cell having an inner border about 155-160 km away from the corresponding base station and an outer border about 240 km away from the corresponding base station, etc. Another use for such extended range cells is to provide an air-to-ground cell in another way than the way currently defined in TETRA standards, the current way using a longer guard period and every second uplink time burst to avoid collision. Yet a further use is to provide the hole in a central area so that it can be covered with hot spots and at a same time it ensured, as will be described with Figure 4, that the user apparatuses in the central area do not register to the extended range cell. This is especially useful in systems in which the user apparatus triggers handovers and selects a cell for use, a cell selection criterion typically being the power budget, i.e. signal strength.

In TETRA, the base station is configured to send synchronization bursts to the user apparatuses, and a user apparatus is configured to adjust its internal time base to be in line with the synchronization bursts received from the base station so that the user apparatus knows when the uplink slot allocated to it starts, and can use the uplink slot for transmission. Naturally, also the downlink slots are synchronized.

Figure 2 is a flow chart illustrating a functionality of a base station providing at least the extended range cell with a dynamic adjustment of the time shift (shifting of timing) of the uplink bursts. More precisely, it illustrates a functionality of the updated synchronizing unit according to an exemplary implementation in which the value for the minimum path delay may be updated frequently.

Referring to Figure 2, the base station, or more precisely the updated synchronizing unit, detects in step 201 that soon it is time to send a synchronization burst in a downlink time slot. In other words, it is detected that the synchronization (synch) time interval between two successive synchronization bursts is near at the end and expiry. Therefore the value for the minimum path delay is obtained in step 202 from the cell size unit, and it is compared in step 203 with the previously obtained minimum path delay. If they are the same (step 204), the synchronization burst is sent in step 205 at a time in which the synchronization time interval according to TETRA standards expires. Then the value obtained in step 202 is set in step 206 to be the previously obtained minimum path delay, and the process starts in step 207 to monitor the synchronization time interval.

If the obtained value and the previously obtained value are not the same (step 204), a waiting time is calculated in step 208. If the obtained value is bigger than the previously obtained value, the waiting time is the remainder of the values. If the obtained value is smaller than the previously obtained value, a remaining time to the time when the next synchronization burst should be sent according to the TETRA standards is determined, and if the remainder of the previously obtained value and the obtained value is smaller than the remaining time, the waiting time is the remainder; otherwise the waiting time is calculated adding to the remaining time the synchronization time interval and the obtained value and subtracting the previously obtained value. Although this may cause that an uplink time slot is missed, TETRA is able to handle the situation by the TETRA error correction.

When the waiting time is known, it is waited for in step 209, and the synchronization burst is sent in step 210 to reflect the new situation (i.e. a new size of the cell, or more precisely, at least a new inner border radius of the cell). Then the process proceeds to step 206 to set the value obtained in step 202 to be the previously obtained minimum path delay.

To summon up, the uplink slots in the service area of the extended coverage cell are shifted in time according to the minimum path delay defined for the extended coverage cell, the shifting being performed in relation to a situation in which the minimum path delay is zero. Hence, all user apparatuses attached to the service area are using the shifted uplinked slots, i.e. the shifting is not performed user apparatus -specifically. Further, the shifting remains constant as long as the minimum path delay remains constant.

It should be appreciated that when the value of the minimum path delay, and thereby the time shift, or sihfting of timing, are semi-permanent, i.e. changed only occasionally, for example when the base station is reconfigured, instead of checking each time whether or not the minimum path delay has been changed and updating the previously used minimum path delay value, steps 201, 205 and 207 are repeated until it is detected that the minimum path delay has been changed, and after steps 208, 209 and 210 are performed, or if the base station did not send synchronization bursts, it will start to send them as if it had been switched on the first time and after that synchronisation bursts are sent according to the time interval.

In an implementation in which the minimum path delay value is a static value, synchronisation bursts are sent according to the time interval after the first synchronisation burst has been sent.

Figure 3 depicts receptions of uplink bursts in two different cells, an uplink UL1 in one cell and an uplink UL2 in another cell, the different cells having the same time base starting at point 300, one of the cells depicting a situation in which the minimum path delay is zero (min delay = 0) and the other one depicting a situation in which the minimum path delay is x milliseconds (min delay = x). As can be seen from the Figure 3, the only difference between the two situations is that in the one having the minimum path delay x milliseconds, namely the uplink 2 (UL2), the start times of the uplink time slots SLOT 1 and SLOT 2 have been shifted by the time 304, i.e. by x milliseconds, otherwise the transmission structures are similar: a slot starts with a head guard period 302, then there is a burst 301a, 301b, comprising the data to be received from a user apparatus to which the time slot 1 has been assigned and from a user apparatus to which the time slot 2 has been assigned for uplink transmissions, the burst being followed by a tail guard period. In the illustrated example it is assumed that the transmitting user apparatuses are in the middle of the cell range; a user apparatus locating nearer to the outer edge would have a smaller actual tail guard period 303, and in principle if the user apparatus locates on the outer edge, the actual tail guard period would be zero at the time the base station receives the time slot. Correspondingly, the nearer the center or inner border a user apparatus locates, the smaller is the actual head guard period 302 when the base station receives the time slot. As can be seen from Figure 3, the prior art situation in which the uplink bursts do not collide is maintained also in extended range cells, even with an extended outer range, thanks to the time shift provided by the minimum path delay.

As is evident from the above, no changes to the user apparatuses are needed: they receive the synchronization burst, and synchronize themselves with that, without noticing the use of the minimum path delay. Hence, an advantage provided by the updated synchronization unit is that over the air interface no changes are needed, it suffices to update the functionality of the base station. Further, the TETRA slot structure is retained, and the uplink channel capacity remains unaffected. However, it is possible to update the user apparatuses to receive information on the minimum path delay value used in a cell, and to process the information.

The updated handover unit is configured to perform a mobile assisted handover in which both the base station and the user apparatus perform measurements, and the user apparatus reports the measurements to the base station by sending corresponding measurement reports. It should be appreciated that in addition to the mobile assisted handover, a mobile initiated handover in which the user apparatus performs quality measurements and performs a handover, with network co-operation, if some other than current serving cell provides a better quality, and a network initiated handover in which the base station performs measurements and a handover is typically initiated by other reasons, like load differences in different cells.

In Figure 4 functionality of the base station, or more precisely the updated handover unit, is described in an exemplary configuration in which the user apparatus measures signal strengths and reports the measured signal strengths to the base station, and the base station measures transmission delays (propagation delays). It should be appreciated that also other factors than the signal strengths and quality may be taken into account, but for the sake of clarity, only the two factors are used herein. Further, in the illustrated example it is assumed that the base station provides one cell that has in its configuration a minimum path delay value.

Referring to Figure 4, the process starts in step 401 in which a user apparatus (UA) is detected in the cell, whose minimum path delay value is T_min and maximum path delay value is T_max. The values are known by the updated handover unit, or obtained when a first user apparatus connects and tries to registers to the extended range cell, for example. It should be appreciated that the user apparatus may be detected in the cell (step 401) because the user apparatus has been switched on, or because of a handover of the user apparatus, for example.

The base station measures in step 402 the propagation delay from the user apparatus to the base station, and compares the propagation delay with the path delay values. If the measured propagation delay is (step 403) not within T_min and T_max the user apparatus is out of the service area of the cell, and possibly out-of-reach of the base station, and the base station sends in step 404 no communication to the user apparatus. In other words, the base station omits the communication to the user apparatus. Since the user apparatus does not receive anything from the base station over the cell, the user apparatus is thereby forced/instructed to try to register to another cell. In another implementation, instead of omitting communication to the user apparatus, the base station may be configured to instruct in step 404 the user apparatus to register to another cell.

If the measured propagation delay is (step 403) within the time window defined by T_min and T_max, the user apparatus is in the service area of the cell, and in the illustrated example the user apparatus is allowed in step 405 to register to the cell. The way the registration is performed bears no significance to the invention and any way may be used.

When the user apparatus is registered to the cell, the base station measures, for example in response to receiving a measurement report from the user apparatus, in step 406 the propagation delay from the user apparatus to the base station, and compares in step 407 the propagation delay with the path delay values. If the measured propagation delay is (step 407) not within T_min and T_max, the user apparatus has moved out of the service area of the cell, and possibly out-of-reach of the base station, and the process proceeds to step 404 to omit communications to the user apparatus. Since the user apparatus does not receive anything from the base station over the cell, the user apparatus is thereby forced/instructed to perform a handover to another cell.

If the measured propagation delay is (step 407) within the time window defined by T_min and T_max, the signal strength of the cell, received from the user apparatus in a measurement report, is taken in step 408 into consideration. If the signal strength is weaker (smaller) than an accepted signal strength level (step 409), the process proceeds to step 404 to omit communications to the user apparatus. Since the user apparatus does not receive anything from the base station over the cell, the user apparatus is thereby forced/instructed to perform a handover to another cell.

In another implementation, instead of omitting communication to the user apparatus, the base station may be configured to instruct in step 404, when entered after step 407 or 409, the user apparatus to perform a handover to another cell. The way the handover is performed bears no significance to the invention and any way may be used. The handover may be triggered also by other reasons, such as the user apparatus detecting a cell having a stronger link budget.

If the signal strength is not weaker than the accepted signal strength level (step 409), the process returns to step 406 to measure the propagation delay of the user apparatus.

Thanks to the value for the minimum path delay, the above procedure ensures that when hot spot cells are provided under the coverage of the TETRA cell, in the "hole area", a user apparatus in the hole area is guided, by omitting communication from the base station, or instructing to register or to perform a handover to the hot spot cells, regardless of whether or not in the "hole area" the extended range cell would provide the strongest signal strength. In other words, user apparatuses are prevented to register to the extended range cell. In an alternative embodiment, instead of step 408 it may be checked from the measurement results whether or not at least in one hot spot cell a signal strength is at least acceptable, and if there is at least one such hot spot cell, the process proceeds to step 404 to omit the communication causing the user apparatus to perform a handover to the hot spot cell having the highest signal strength.

Hence the updated handover unit may be used to prevent registrations to the TETRA cell when hot spot cells are available, thanks to the minimum path delay value, and comparing it with the propagation delay. This is a very useful feature, especially if a user apparatus is moving towards the base station (and towards the hole), since once a user apparatus has been registered to a TETRA cell, user apparatus will remain, according to the current TETRA specifications, in the TETRA cell even though a hot spot cell providing better quality would be available. By means of the minimum path delay value, the user apparatus is guided to the hot spot cell when the minimum path delay criterium is not met.

As is evident from the above, the introduction of the new parameter value, minimum path delay, and the use of it does not increase the need for a computing capacity in the base station or the network element controlling the base station, the calculations are simply calculations requiring only a little computing capacity and storage area capacity.

The steps and related functions described above in Figures 2 and 4 are in no absolute chronological order, and some of the steps may be performed simultaneously or in an order differing from the given one. Other functions can also be executed between the steps or within the steps. Some of the steps or part of the steps can also be left out or replaced by a corresponding step or part of the step. For example, the updated handover unit may be configured to react just to delays, in which case steps 408 and 409 are left out and if the delay is within the window defined by the minimum value and the maximum value (step 407), the process proceeds to step 406 to measure the propagation delays. Yet another example is to split the checking of step 403 and/or step 407 to two separate checks, for example checking first whether or not the propagation delay is smaller than the minimum path value, and if not, checking whether or not the propagation delay is smaller than or equal to the maximum path value.

The techniques described herein may be implemented by various means so that an apparatus implementing one or more functions of a corresponding apparatus described with an embodiment/example/implementation comprises not only prior art means, but also means for implementing the one or more functions of a corresponding apparatus described with an embodiment and it may comprise separate means for each separate function, or means may be configured to perform two or more functions. For example, the cell size unit, and/or the updated synchronization unit, and/or updated handover unit may be software and/or software-hardware and/or hardware and/or firmware components (recorded indelibly on a medium such as read-only-memory or embodied in hard-wired computer circuitry) or combinations thereof. Software codes may be stored in any suitable, processor/computer/apparatus-readable data storage medium(s) or memory unit(s) or article(s) of manufacture and executed by one or more processors/computers, hardware (one or more apparatuses), firmware (one or more apparatuses), software (one or more modules), or combinations thereof. For a firmware or software, implementation can be through modules (e.g., procedures, functions, and so on) that perform the functions described herein. Software codes may be stored in any suitable, processor/computer-readable data storage medium(s) or memory unit(s) or article(s) of manufacture and executed by one or more processors/computers.

Figure 5 is a simplified block diagram illustrating some units for an apparatus 500 configured to be a base station, or a corresponding network apparatus, i.e. an apparatus comprising at least one of the cell size unit, and/or the updated synchronization unit, and/or updated handover unit described above. In the illustrated example the apparatus comprises one or more interfaces (IF) 501 for receiving and transmitting information over the corresponding infrastructure, like the TETRA, a processor 502 configured to implement at least the cell size unit, and/or the updated synchronization unit, and/or updated handover unit functionality described herein with a corresponding algorithm/algorithms 503 and a memory 504 usable for storing a program code required at least for the cell size unit, and/or the updated synchronization unit, and/or updated handover unit. The memory 504 is also usable for storing other possible information, like the minimum path delay and/or maximum path delay values or information needed to determine them, and the memory 504 is also usable for implementing the cell size unit in implementations in which the cell size unit is only for storing parameter information.

In other words, an apparatus configured to provide the base station, or an apparatus configured to provide one or more corresponding functionalities, is a computing device that may be any apparatus or device or equipment configured to perform one or more of corresponding base station functionalities described with an embodiment/example/implementation, and it may be configured to perform functionalities from different embodiments/examples/ implementations. The cell size unit, and/or the updated synchronization unit, and/or updated handover unit may be separate units, even located in another physical apparatus, the distributed physical apparatuses forming one logical apparatus providing the functionality, or a unit may be integrated to another unit in the same apparatus.

More precisely, an apparatus configured to provide the base station, or an apparatus configured to provide one or more corresponding functionalities, may generally include a processor, controller, control unit, microcontroller, or the like connected to a memory and to various interfaces of the apparatus. Generally the processor is a central processing unit, but the processor may be an additional operation processor. Each or some or one of the units and/or algorithms described herein may be configured as a computer or a processor, or a microprocessor, such as a single-chip computer element, or as a chipset, including at least a memory for providing storage area used for arithmetic operation and an operation processor for executing the arithmetic operation. Each or some or one of the units and/or algorithms described above may comprise one or more computer processors, application-specific integrated circuits (ASIC), digital signal processors (DSP), digital signal processing devices (DSPD), programmable logic devices (PLD), field-programmable gate arrays (FPGA), and/or other hardware components that have been programmed in such a way to carry out one or more functions or calculations of one or more examples. In other words, each or some or one of the units and/or the algorithms described above may be an element that comprises one or more arithmetic logic units, a number of special registers and control circuits.

Further, an apparatus implementing functionality or some functionality according to an embodiment/example/implementation of a base station, or an apparatus configured to provide one or more corresponding functionalities, may generally include volatile and/or non-volatile memory, for example EEPROM, ROM, PROM, RAM, DRAM, SRAM, double floating-gate field effect transistor, firmware, programmable logic, etc. and typically store content, data, or the like. The memory or memories may be of any type (different from each other), have any possible storage structure and, if required, being managed by any database/memory management system. The memory may also store computer program code such as software applications (for example, for one or more of the units/algorithms/codecs) or operating systems, information, data, content, or the like for the processor to perform steps associated with operation of the apparatus in accordance with examples/embodiments. The memory, or part of it, may be, for example, random access memory, a hard drive, or other fixed data memory or storage device implemented within the processor/apparatus or external to the processor/apparatus in which case it can be communicatively coupled to the processor/apparatus via various means as is known in the art. An example of an external memory includes a removable memory detachably connected to the apparatus.

In addition, an apparatus implementing functionality or some functionality according to an embodiment/example/implementation of the base station, or an apparatus configured to provide one or more corresponding functionalities, may generally comprise different interface units, such as one or more receiving units for receiving user data, control information, requests and responses, for example, and one or more sending units for sending user data, control information, responses and requests, for example. The receiving unit and the sending unit each provides an interface in an apparatus, the interface including a transmitter and/or a receiver or any other means for receiving and/or sending (transmitting) information, and performing necessary functions so that user data, control information, etc. can be received and/or sent. The receiving and sending units may comprise a set of antennas, the number and type of which are not limited to any particular number or type.

Further, an apparatus implementing functionality or some functionality according to an embodiment/example/implementation of a base station, or an apparatus configured to provide one or more corresponding functionalities, may comprise other units.

It will be obvious to a person skilled in the art that, as technology advances, the inventive concept can be implemented in various ways. The invention and its embodiments are not limited to the examples described above but may vary within the scope of the claims.

## Claims

1. A method comprising:
using, by a network apparatus, a time division multiple access technique with a fixed slot structure on an air interface, the fixed slot structure having a fixed starting time of a transmission of an uplink burst in relation to a time slot allocated for the transmission and defining a fixed guard period between two uplink bursts in two consecutive slots;
providing (202) at least one cell controlled by the network apparatus with a minimum path delay value for the cell or information with which the minimum path delay value may for the cell be determined by the network apparatus;
if the minimum path delay value is zero, scheduling, by the network apparatus, sending of synchronization burst using the fixed starting time; and
if the minimum path delay value is bigger than zero, calculating, by the network apparatus, a shifting time, in the at least one cell based on the minimum path delay value and scheduling sending (210) of synchronization bursts using a time obtained by adding to the fixed starting time the shifting time.

2. A method as claimed in claim 1, further comprising:
detecting, by the network apparatus, that the minimum path delay value has been changed to a new minimum path delay value;
calculating (208), by the network apparatus, in response to the new minimum path value, a waiting time based on the previous minimum path delay value and the new minimum path delay value;
waiting (209), by the network apparatus, the waiting time before sending a synchronization burst to user apparatuses served by the at least one cell; and
sending (210), by the network apparatus, to the user apparatuses served by the at least one cell, synchronization bursts according to a schedule based on the current minimum path delay value.

3. A method as claimed in claim 2, wherein the detecting is performed by:
detecting (201) that a time interval according to the fixed slot structure between two successive synchronization bursts is to be expired;
obtaining (202) a minimum path delay value;
comparing (203) the obtained minimum path delay value with a previously obtained minimum path delay value; and
if they are not the same (204), detecting that the minimum path delay value has been changed to the new minimum path value.

4. A method as claimed in claim 1, 2 or 3, further comprising:
providing the at least one cell with a maximum path delay value or information with which the maximum path delay value may be determined by the network apparatus;
using (401) in determination of coverage of the at least one cell an inner border radius calculated on the basis of the minimum path delay and an outer border radius calculated on the basis of the maximum path delay.

5. A method as claimed in claim 4, wherein the difference between the minimum path delay value and the maximum path delay value is smaller than or equal to the fixed guard period.

6. A method as claimed in claim 4 or 5, further comprising performing by the network apparatus the following user apparatus -specifically to user apparatuses served in the at least one cell: measuring (402, 406) a propagation delay of uplink transmissions from a user apparatus; comparing (403, 407) the propagation delay with the minimum path delay and/or with the maximum path delay; and if the propagation delay exceeds the maximum path delay or if the minimum path delay exceeds the propagation delay, omitting communications to the user apparatus or instructing the user apparatus to perform a handover.

7. A method as claimed in claim 6, further comprising:
receiving signal strength measurement reports from the user apparatus;
if the propagation delay is within the minimum path delay and the maximum path delay, the method further comprises:
checking (409) whether the measurement reports indicate that the signal strength of the serving cell is weaker than what is acceptable; and
if it is, instructing the user apparatus to perform a handover.

8. An apparatus (120, 500) comprising means for implementing a method as claimed in any of claims 1 to 7.

9. An apparatus (120) as claimed in claim 8, wherein the means for implementing further comprises means for providing a cell (111) by the apparatus, the cell coverage starting (111b) from the apparatus at a distance defined by the minimum path value.

10. An apparatus (500) as claimed in claim 8 or 9, the apparatus comprising at least one antenna (501), one processor (502), and one memory (504) including computer program code, wherein the at least one memory and the computer program code are configured to, with the at least one processor and the antenna, provide the means for implementing.

11. An apparatus (120, 500) as claimed in claim 8, 9 or 10, wherein the apparatus is a TETRA base station, or a P25 phase 2 base station, or a digital mobile radio base station.

12. A computer program product (503) comprising program instructions which, when run on a computing apparatus, causes the computing apparatus to perform a method as claimed in any of claims 1 to 7.

13. A system (100) comprising at least:
one or more network apparatuses (120) as claimed in claim 8, 9, 10 or 11; and
one or more mobile user apparatus (130) configured to use the time division multiple access technique with a fixed slot structure and comprising means for receiving a synchronization burst from at least one of the network apparatus, and means for synchronizing uplink transmissions to the at least one network apparatus accordingly.

14. A system (100) as claimed in claim 13, wherein at least one of the one or more mobile user apparatuses (130) is configured to trigger a handover to another cell in response to receiving no communications in a cell (111) from a network apparatus (120) providing the cell (111).

## Patentansprüche

1. Verfahren, umfassend:
Benutzen einer Zeitmultiplex-Mehrfachzugriffstechnik mit einer festen Schlitzstruktur auf einer Luftschnittstelle durch eine Netzwerkvorrichtung, wobei die feste Schlitzstruktur eine feste Startzeit einer Übertragung eines Uplink-Burst in Bezug auf einen für die Übertragung zugewiesenen Zeitschlitz aufweist und eine feste Schutzzeit zwischen zwei Uplink-Burst in zwei aufeinanderfolgenden Schlitzen definiert;
Bereitstellen (202) zumindest einer von der Netzwerkvorrichtung gesteuerten Zelle mit einem Pfadverzögerungsmindestwert für die Zelle oder Information, mit der der Pfadverzögerungsmindestwert für die Zelle durch die Netzwerkvorrichtung bestimmt werden kann;
wenn der Pfadverzögerungsmindestwert Null ist, Planen durch die Netzwerkvorrichtung des Sendens einer Synchronisation des Burst unter Benutzung der festen Startzeit; und
wenn der Pfadverzögerungsmindestwert größer als Null ist, Berechnen durch die Netzwerkvorrichtung einer Schaltzeit in der zumindest einen Zelle basierend auf dem Pfadverzögerungsmindestwert und Planen des Sendens (210) der Synchronisation des Burst unter Verwendung einer Zeit, die durch Hinzufügen der Schaltzeit zu der festen Startzeit ermittelt wird.

2. Verfahren nach Anspruch 1, ferner umfassend:
Erkennen durch die Netzwerkvorrichtung, dass der Pfadverzögerungsmindestwert in einen neuen Pfadverzögerungsmindestwert geändert wurde;
Berechnen (208) durch die Netzwerkvorrichtung in Reaktion auf den neuen Pfadmindestwert einer Wartezeit basierend auf dem vorherigen Pfadverzögerungsmindestwert und dem neuen Pfadverzögerungsmindestwert;
Warten (209) durch die Netzwerkvorrichtung, wobei die Wartezeit vor dem Senden einer Synchronisation eines Burst an Benutzervorrichtungen, die von der zumindest einen Zelle bedient werden; und
Senden (210), durch die Netzwerkvorrichtung an die von der zumindest einen Zelle bedienten Benutzervorrichtungen von Synchronisation der Burst gemäß einem Zeitplan, der auf dem aktuellen Pfadverzögerungsmindestwert basiert.

3. Verfahren nach Anspruch 2, wobei das Erkennen durchgeführt wird durch:
Erfassen (201), dass ein Zeitintervall gemäß der festen Schlitzstruktur zwischen zwei aufeinanderfolgenden Synchronisationen der Burst abgelaufen sein soll;
Erhalten (202) eines Pfadverzögerungsmindestwerts;
Vergleichen (203) des erhaltenen Pfadverzögerungsmindestwerts mit einem zuvor erhaltenen Pfadverzögerungsmindestwert; und wenn sie nicht gleich sind (204), Erkennen, dass der Pfadverzögerungsmindestwert in einen neuen Pfadmindestwert geändert wurde.

4. Verfahren nach Anspruch 1, 2 oder 3, ferner umfassend:
Bereitstellen der zumindest einen Zelle mit einem Pfadverzögerungshöchstwert oder einer Information, mit der der Pfadverzögerungshöchstwert durch die Netzwerkvorrichtung bestimmt werden kann;
Verwenden (401) bei der Bestimmung der Abdeckung der zumindest einen Zelle eines Innenrandradius, der auf der Grundlage der Mindestpfadverzögerung berechnet wird, und
eines Außenrandradius, der auf der Grundlage der Höchstpfadverzögerung berechnet wird.

5. Verfahren nach Anspruch 4, wobei die Differenz zwischen dem Pfadverzögerungsmindestwert und dem Pfadverzögerungshöchstwert kleiner oder gleich der festen Schutzzeit ist.

6. Verfahren nach Anspruch 4 oder 5, ferner umfassend das Durchführen durch die Netzwerkvorrichtung der folgenden Benutzervorrichtung - spezifisch für Benutzervorrichtungen, die in der zumindest einen Zelle bedient werden:
Messen (402, 406) einer Laufzeitverzögerung von Uplink-Übertragungen ab einer Benutzervorrichtung;
Vergleichen (403, 407) der Laufzeitverzögerung mit der Mindestpfadverzögerung und/oder mit der Höchstpfadverzögerung; und
wenn die Laufzeitverzögerung die Höchstpfadverzögerung überschreitet, oder wenn die Mindestpfadverzögerung die Laufzeitverzögerung überschreitet, wobei die Kommunikationen mit der Benutzervorrichtung unterbleibt oder die Benutzervorrichtung angewiesen wird, eine Übergabe durchzuführen.

7. Verfahren nach Anspruch 6, ferner umfassend:
Empfangen von Signalstärke-Messberichten von der Benutzervorrichtung;
wenn die Laufzeitverzögerung innerhalb der Mindestpfadverzögerung und der Höchstpfadverzögerung liegt, umfasst das Verfahren ferner Folgendes:
Überprüfen (409), ob die Messberichte angeben, dass die Signalstärke der Bedienzelle schwächer ist als das, was akzeptabel ist; und
wenn ja, Anweisen der Benutzervorrichtung, eine Übergabe durchzuführen.

8. Vorrichtung (120, 500), umfassend Mittel zum Implementieren eines Verfahrens nach einem beliebigen der vorstehenden Ansprüche 1 bis 7.

9. Vorrichtung (120) nach Anspruch 8, wobei die Mittel zum Implementieren ferner Mittel zum Bereitstellen einer Zelle (111) durch die Vorrichtung umfassen, wobei die Zellabdeckung ab der Vorrichtung (111b) in einem durch den Pfadmindestwert definierten Abstand beginnt.

10. Vorrichtung (500) nach Anspruch 8 oder 9, wobei die Vorrichtung zumindest eine Antenne (501), einen Prozessor (502) und einen Speicher (504) einschließlich eines Rechnerprogrammcodes umfasst, wobei der zumindest eine Speicher und der Rechnerprogrammcode so konfiguriert sind, dass sie mit dem zumindest einen Prozessor und der Antenne die Mittel zur Implementierung bereitstellen.

11. Vorrichtung (120, 500) nach Anspruch 8, 9 oder 10, wobei die Vorrichtung eine TETRA-Basisstation oder eine P25-Phase 2-Basisstation oder eine digitale Mobilfunk-Basisstation ist.

12. Rechnerprogrammprodukt (503), umfassend Programmanweisungen, die, wenn sie auf einer Rechenvorrichtung ausgeführt werden, veranlassen, dass die Rechenvorrichtung ein Verfahren nach einem beliebigen der vorstehenden Ansprüche 1 bis 7 durchführt.

13. System (100), zumindest umfassend:
eine oder mehrere Netzwerkvorrichtung(en) (120) nach einem beliebigen der vorstehenden Ansprüche 8, 9, 10 oder 11; und
eine oder mehrere mobile Benutzervorrichtung(en) (130), die so konfiguriert ist (sind), dass sie die Zeitmultiplex-Mehrfachzugriffstechnik mit einer festen Schlitzstruktur verwendet(n), und Mittel zum Empfangen einer Synchronisation des Burst von zumindest einer der Netzwerkvorrichtungen und Mittel zum Synchronisieren von Uplink-Übertragungen an die zumindest eine Netzwerkvorrichtung entsprechend umfasst(en).

14. System (100) nach Anspruch 13, wobei zumindest eine der einen oder mehreren mobilen Benutzervorrichtungen (130) so konfiguriert ist (sind), dass sie eine Übergabe an eine andere Zelle in Reaktion auf kein Empfangen einer Kommunikation in einer Zelle (111) von einer Netzwerkvorrichtung (120) auslöst, die die Zelle (111) bereitstellt.

## Revendications

1. Procédé comprenant :
l'utilisation, par un appareil de réseau, d'une technique d'accès multiple par répartition dans le temps avec une structure de fente fixe sur une interface aérienne, la structure de fente fixe ayant un temps de début fixe d'une transmission d'une rafale de liaison montante par rapport à une fente temporelle attribuée pour la transmission et définissant une période de garde fixe entre deux rafales de liaison montante dans deux fentes consécutives ;
la fourniture (202), à au moins une cellule commandée par l'appareil de réseau, d'une valeur de retard de trajet minimal pour la cellule ou d'informations avec lesquelles la valeur de retard de trajet minimal peut, pour la cellule, être déterminée par l'appareil de réseau ;
si la valeur de retard de trajet minimal est nulle, la planification, par l'appareil de réseau, de l'envoi d'une rafale de synchronisation à l'aide du temps de début fixe ; et
si la valeur de retard de trajet minimal est supérieure à zéro, le calcul, par l'appareil de réseau, d'un temps de décalage dans la au moins une cellule sur la base de la valeur de retard de trajet minimal et la planification de l'envoi (210) de rafales de synchronisation à l'aide d'un temps obtenu par l'ajout du temps de décalage au temps de début fixe.

2. Procédé selon la revendication 1, comprenant en outre :
la détection, par l'appareil de réseau, que la valeur de retard de trajet minimal a été modifiée en une nouvelle valeur de retard de trajet minimal ;
le calcul (208), par l'appareil de réseau, en réponse à la nouvelle valeur de trajet minimal, d'un temps d'attente basé sur la valeur de retard de trajet minimal précédente et la nouvelle valeur de retard de trajet minimal ;
l'attente (209), par l'appareil de réseau, du temps d'attente avant l'envoi d'une rafale de synchronisation à des appareils d'utilisateur desservis par la au moins une cellule ; et
l'envoi (210), par l'appareil de réseau, aux appareils d'utilisateur desservis par la au moins une cellule, de rafales de synchronisation selon une planification basée sur la valeur actuelle de retard de trajet minimal.

3. Procédé selon la revendication 2, dans lequel la détection est réalisée par :
la détection (201) qu'un intervalle de temps selon la structure de fente fixe entre deux rafales de synchronisation successives doit être expiré ;
l'obtention (202) d'une valeur de retard de trajet minimal ;
la comparaison (203) de la valeur de retard de trajet minimal obtenue avec une valeur de retard de trajet minimal précédemment obtenue ; et
si elles ne sont pas identiques (204), la détection que la valeur de retard de trajet minimal a été modifiée en la nouvelle valeur de retard de trajet minimal.

4. Procédé selon la revendication 1, 2 ou 3, comprenant en outre :
la fourniture, à la au moins une cellule, d'une valeur de retard de trajet maximal ou d'informations avec lesquelles la valeur de retard de trajet maximal peut être déterminée par l'appareil de réseau ;
l'utilisation (401), dans la détermination de la couverture de la au moins une cellule, d'un rayon de bordure interne calculé sur la base du retard de trajet minimal et d'un rayon de bordure externe calculé sur la base du retard de trajet maximal.

5. Procédé selon la revendication 4, dans lequel la différence entre la valeur de retard de trajet minimal et la valeur de retard de trajet maximal est inférieure ou égale à la période de garde fixe.

6. Procédé selon la revendication 4 ou 5, comprenant en outre la réalisation par l'appareil de réseau l'appareil d'utilisateur suivant -spécifiquement pour des appareils d'utilisateur desservis dans la au moins une cellule :
la mesure (402, 406) d'un retard de propagation de transmissions de liaison montante à partir d'un appareil d'utilisateur ;
la comparaison (403, 407) du retard de propagation avec le retard de trajet minimal et/ou avec le retard de trajet maximal ; et
si le retard de propagation dépasse le retard de trajet maximal ou si le retard de trajet minimal dépasse le retard de propagation, l'omission de communications vers l'appareil d'utilisateur ou l'instruction de l'appareil d'utilisateur de réaliser un transfert intercellulaire.

7. Procédé selon la revendication 6, comprenant en outre :
la réception de rapports de mesure d'intensité de signal à partir de l'appareil d'utilisateur ;
si le retard de propagation est entre le retard de trajet minimal et le retard de trajet maximal, le procédé comprend en outre :
la vérification (409) si les rapports de mesure indiquent que l'intensité de signal de la cellule de desserte est plus faible que ce qui est acceptable ; et
si tel est le cas, l'instruction de l'appareil d'utilisateur de réaliser un transfert intercellulaire.

8. Appareil (120, 500) comprenant des moyens pour mettre en oeuvre un procédé selon l'une quelconque des revendications 1 à 7.

9. Appareil (120) selon la revendication 8, dans lequel les moyens pour la mise en oeuvre comprennent en outre des moyens pour fournir une cellule (111) par l'appareil, la couverture de cellule débutant (11lb) à partir de l'appareil à une distance définie par la valeur de trajet minimal.

10. Appareil (500) selon la revendication 8 ou 9, l'appareil comprenant au moins une antenne (501), un processeur (502) et une mémoire (504) incluant un code de programme informatique, dans lequel la au moins une mémoire et le code de programme informatique sont configurés pour, avec le au moins un processeur et l'antenne, fournir les moyens pour la mise en oeuvre.

11. Appareil (120, 500) selon la revendication 8, 9 ou 10, dans lequel l'appareil est une station de base TETRA, ou une station de base P25 phase 2, ou une station de base de radio mobile numérique.

12. Produit programme informatique (503) comprenant des instructions de programme qui, lorsqu'elles sont exécutées sur un appareil informatique, amènent l'appareil informatique à réaliser un procédé selon l'une quelconque des revendications 1 à 7.

13. Système (100) comprenant au moins :
un ou plusieurs appareils de réseau (120) selon la revendication 8, 9, 10 ou 11 ; et
un ou plusieurs appareils mobiles d'utilisateur (130) configurés pour utiliser la technique d'accès multiple par répartition dans le temps avec une structure de fente fixe et comprenant des moyens pour recevoir une rafale de synchronisation provenant d'au moins l'un des appareils de réseau, et des moyens pour synchroniser des transmissions de liaison montante avec le au moins un appareil de réseau en conséquence.

14. Système (100) selon la revendication 13, dans lequel au moins l'un desdits un ou plusieurs appareils mobiles d'utilisateur (130) est configuré pour déclencher un transfert intercellulaire vers une autre cellule en réponse à la réception d'aucune communication dans une cellule (111) à partir d'un appareil de réseau (120) fournissant la cellule (111) .
